Europäisches Patentamt

European Patent Office

Office européen des brevets

(11) Veröffentlichungsnummer: **0 106 095**
**A1**

# (12) EUROPÄISCHE PATENTANMELDUNG

(21) Anmeldenummer: 83108652.5

(22) Anmeldetag: 02.09.83

(51) Int. Cl.³: **G 05 D 23/275**
**G 05 D 23/19, F 24 D 19/10**

(30) Priorität: 15.09.82 DE 8225969 U

(43) Veröffentlichungstag der Anmeldung:
25.04.84 Patentblatt 84/17

(84) Benannte Vertragsstaaten:
AT BE CH DE FR GB IT LI LU NL SE

(71) Anmelder: Joh. Vaillant GmbH u. Co
Berghauser Strasse 40 Postfach 10 10 20
D-5630 Remscheid 1(DE)

(72) Erfinder: Hangauer, Wilfried, Dr.
Heidenstrasse 15
D-5609 Hückeswagen(DE)

(74) Vertreter: Heim, Johann-Ludwig
c/o Joh. Vaillant GmbH u. Co Postfach 10 10 20
Berghauser Strasse 40
D-5630 Remscheid 1(DE)

(54) Regelung für eine Heizungsanlage.

(57) Die vorliegende Erfindung bezieht sich auf eine Regelung für eine Heizungsanlage (2) aus mehreren thermostatventilgesteuerten Heizkörpern (10, 11, 12), die von einem Kessel gespeist sind und besteht darin, daß die Thermostatventile (13, 14, 15 ...) einen Geber (24, 26, 28 ...) aufweisen, dessen Zustand mit der Stellung des Ventilverschlußgliedes des Thermostatventils variabel ist und diesen ändert, wenn das Ventilverschlußglied sich seiner öffnenden Endstellung annähert beziehungsweise sich hiervon entfernt, und darin, daß alle Geber (24, 26, 28 ...) im Sinne einer ODER-Bedingung an den Antrieb (16) des Ventils (5) des Kessels (1) angeschlossen sind.

EP 0 106 095 A1

Fig. 1

**0106095**

Joh. Vaillant · GmbH u. Co.

EP 921

1. September 1983

- 1 -

Regelung für eine Heizungsanlage

Die vorliegende Erfindung bezieht sich auf eine Regelung für eine Heizungsanlage gemäß dem Oberbegriff des Hauptanspruchs.

Normale Heizungsanlagen bestehen zum Beispiel aus einem Gas-Wasserheizer, dessen Brenner von einem Magnetventil gesteuert ist und der sich in einem Stromkreis befindet, der von wenigstens einem oder mehreren Kontakten beherrscht ist, wovon einer ein Raumthermostatkontakt sein kann.

Die Radiatoren der Heizungsanlage sind in der Regel mit Thermostatventilen versehen, um im Aufstellungsraum eine Temperaturregelung zu ermöglichen. Über die Wärmequelle wird den einzelnen in verschiedenen Räumen angeordneten Thermostat-

- 2 -

0106095

ventilen eine Vorlauftemperatur angeboten, die in ihrer
Höhe etwas über der im Maximum vom Thermostatventil zum Erreichen des Soll-Wertes notwendigen Temperatur liegt. Das
bedeutet, daß vom Gas-Wasserheizer in der Regel zu viel Energie verbraucht wird als für den angestrebten Zweck notwendig
ist.

Der vorliegenden Erfindung liegt die Aufgabe zugrunde, die
Wärmequelle, sei es ein Kessel, Gas-Wasserheizer oder elektrisch beheizter Wasserheizer, nur dann in Betrieb gehen zu
lassen, wenn wenigstens ein Thermostatventil aus der Vielzahl Wärme anfordert.

Zur Lösung dieser Aufgabe besteht die Erfindung in den kennzeichnenden Merkmalen des Hauptanspruchs.

Weitere Ausgestaltungen und besonders vorteilhafte Weiterbildungen der Erfindung sind Gegenstand der Unteransprüche beziehungsweise gehen aus der nachfolgenden Beschreibung hervor,
die Ausführungsbeispiele der Erfindung zum Inhalt hat.

Es zeigen:

Figur eins eine schematische Darstellung der Heizungsanlage,

Figur zwei ein Prinzip-Querschnittsbild eines Thermostatventils und die

Figuren drei bis fünf elektrische Schaltungen zur Auswertung der Ventilstellungsgeber.

In allen fünf Figuren bedeuten gleiche Bezugszeichen jeweils die gleichen Einzelheiten.

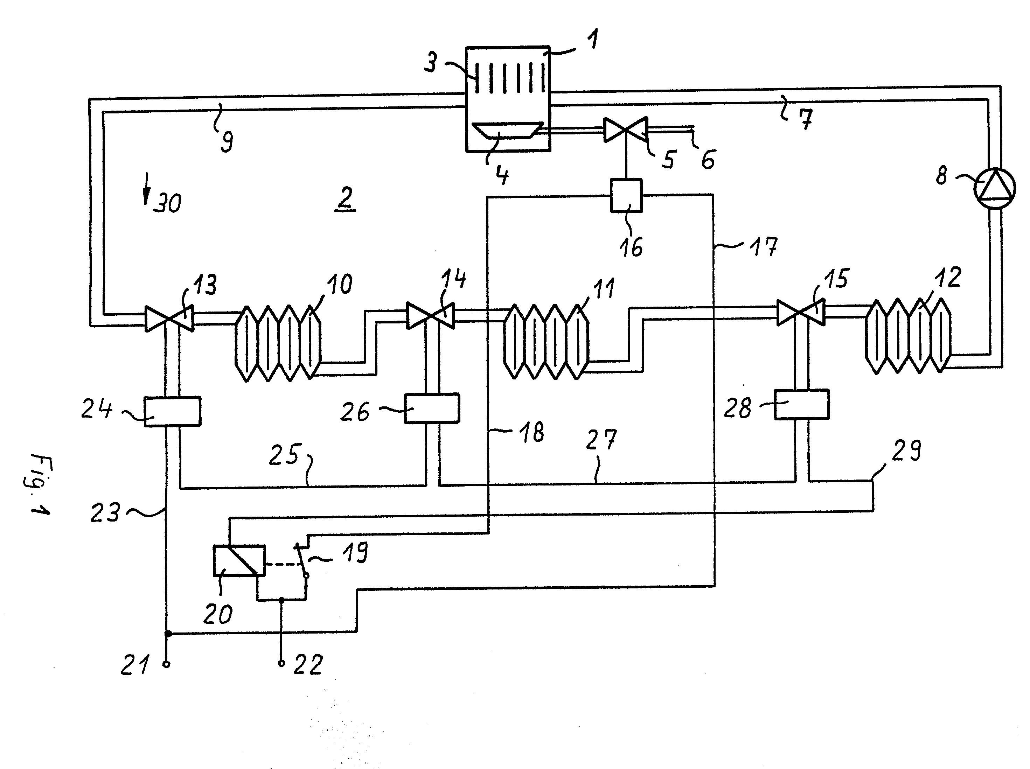

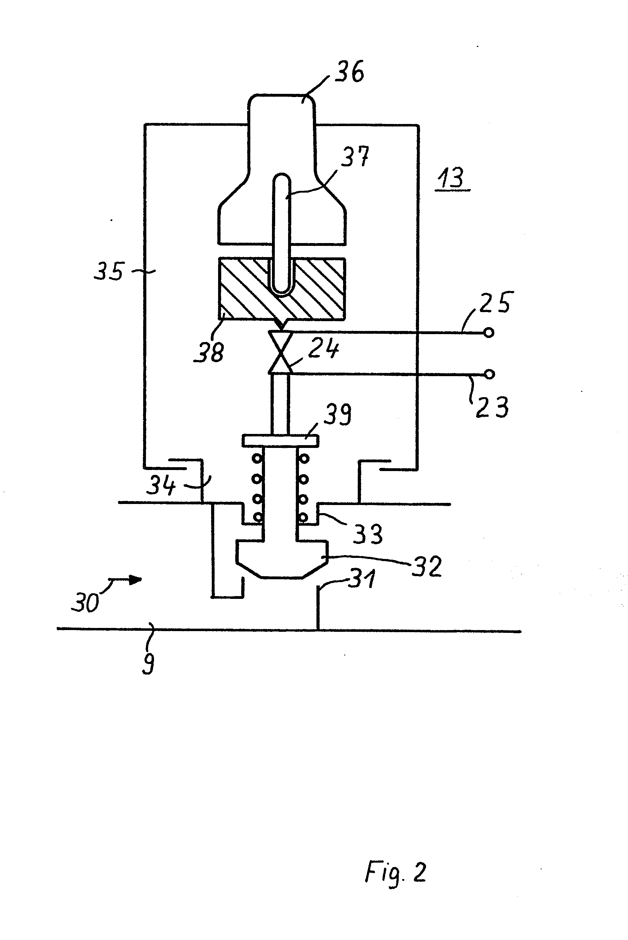

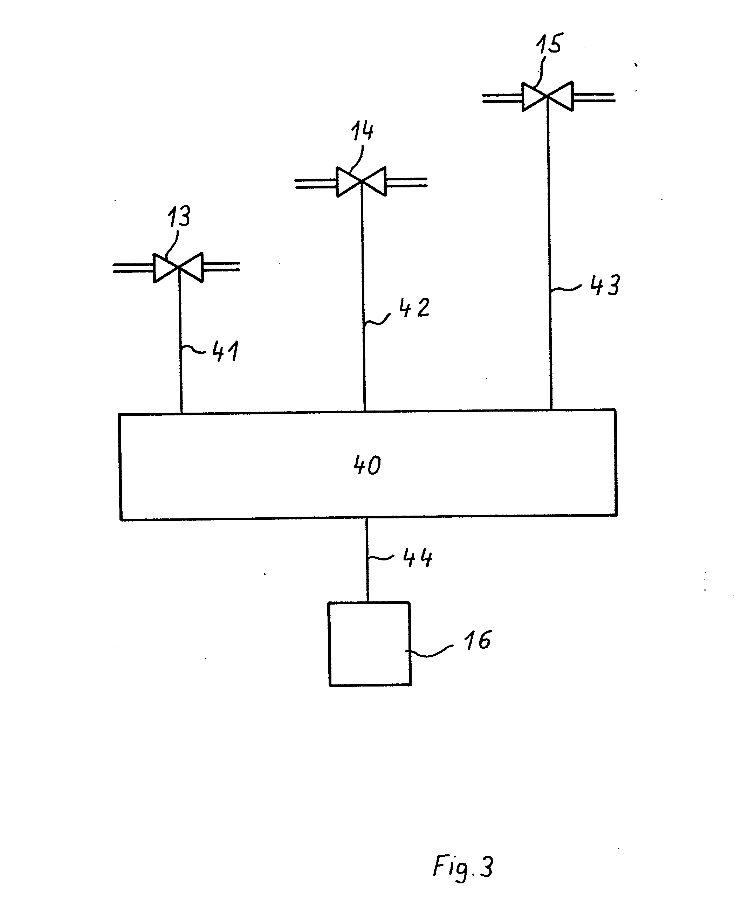

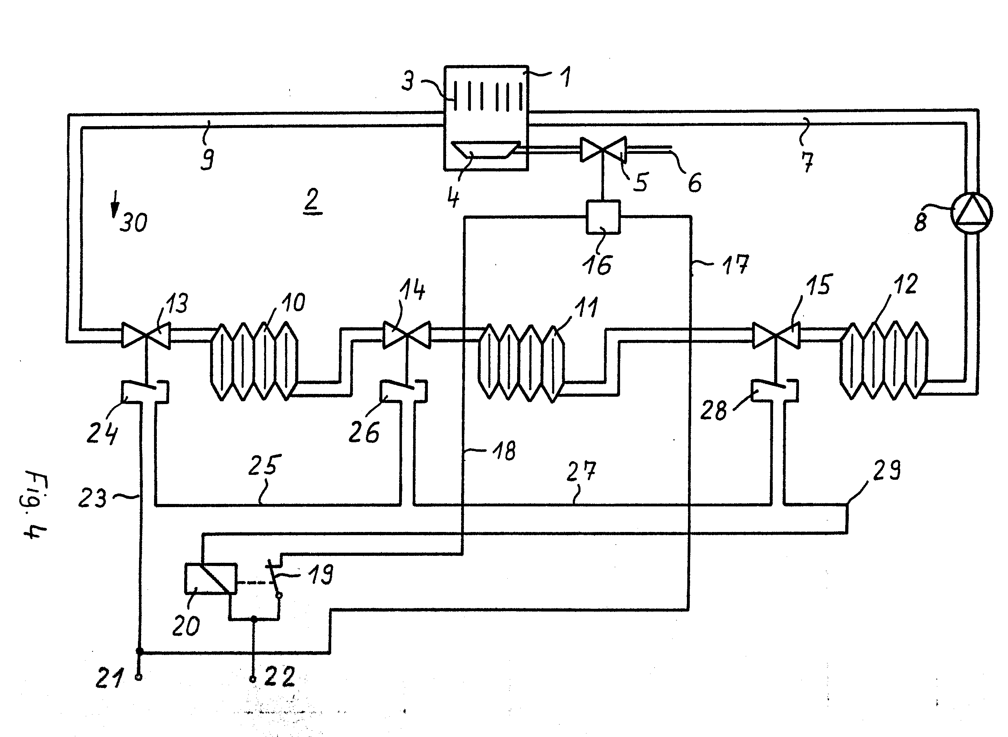

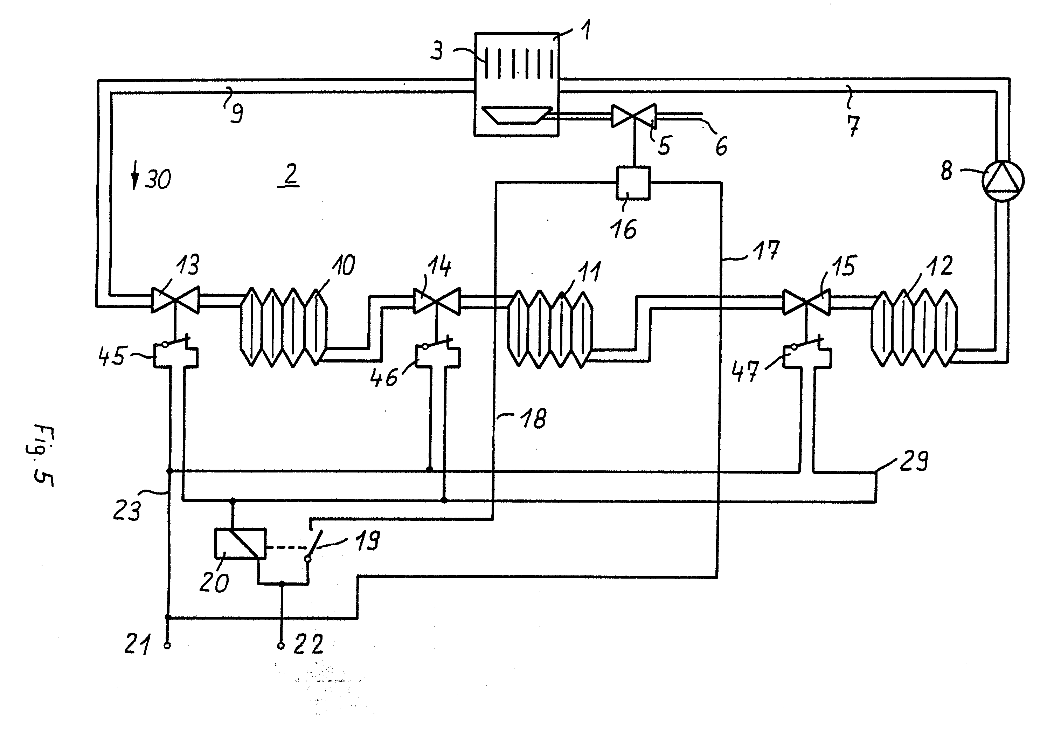

In der Figur eins ist eine von einer Wärmequelle 1 beheizte Heizungsanlage 2 dargestellt, wobei die Wärmequelle 1 aus einem Kessel oder einem Gas-Wasserheizer bestehen kann. Die Wärmequelle weist einen Wärmetauscher 3 auf, der von einem Brenner 4 beheizt ist, der über eine mit einem Magnetventil 5 versehene Brennstoffzuleitung 6 gespeist ist. Der Wärmetauscher 3 wird über eine Rücklaufleitung 7, in der eine Umwälzpumpe 8 angeordnet ist, Wasser zugeführt und im erhitzten Zustand über eine Vorlaufleitung 9 abgeführt. Vor- und Rücklaufleitung sind über eine Vielzahl in Serie und/oder parallel geschalteter Heizkörper 10, 11, 12 ... miteinander verbunden, wobei jedem der Heizkörper ein Thermostatventil 13, 14, 15 ... vorgeschaltet ist. Die einzelnen Heizkörper befinden sich in der Regel in verschiedenen Räumen des Aufstellungsgebäudes.

Das Magnetventil 5 besitzt eine Erregungsspule 16, die über Leitungen 17 und 18 einmal mit einem Ruhekontakt 19 eines Relais 20 und zum anderen unmittelbar mit einem Pol 21 einer Wechselstrom-Netzspannungsquelle verbunden ist. Das eine Ende der Relaisspule 20 sowie das andere des Kontaktes 19 sind miteinander verbunden und über eine Leitung an einen zweiten Anschluß 22 der speisenden Netzspannungsquelle angeschlossen.

Von dem Pol 21 geht eine Leitung 23 ab, die zu einem ersten Stellungsgeber 4 des Thermostatventils 13 geführt ist. Über eine Leitung 25 liegt der Geber 24 elektrisch in Reihe mit einem weiteren Geber 26. Dieser Geber liegt über eine Leitung 27 in Reihe mit einem dritten Geber 28 und so weiter. Vom letzten Geber erfolgt eine Rückleitung 29 zurück zur anderen Seite der Relaisspule 20.

Die Figur zwei zeigt den Prinzipaufbau eines Thermostatventils, zum Beispiel des Thermostatventils 13, das im Zuge der Vorlaufleitung 9 liegt. Die Strömungsrichtung ist mit dem Pfeil 30 angegeben. Das Thermostatventil weist in seinem Gehäuse einen Sitz 31 auf, der mit dem einen Ventilverschlußglied 32 korrespondiert. Während der Sitz 31 die eine Endstellung definiert, gibt ein Anschlag 33 die andere Endstellung des Ventils vor, und zwar die, in der das Ventil seine maximale Öffnungsstellung einnimmt. Über das Gehäuse 34 des Thermostatventils ist ein Einstellgriff 35 geschraubt; der Griff dient zum Einstellen von Sollwerten des Thermostatventils. Im Inneren des Gehäuses beziehungsweise des Griffes 35 ist ein Temperaturfühler 36 angeordnet, der eine Stellstange 37 antreibt, die auf ein Druckstück 38 wirkt. Das Ventilverschlußglied 32 ist mit einer mit Ansätzen versehenen Betätigungsstange 39 verbunden, die unter der Leitung einer Rückstellfeder steht. Zwischen der Betätigungsstange 39 und dem Druckstift 38 ist der Stellungsgeber 24, 26, 28 und so weiter angeordnet, der im Ausführungsbeispiel der Figur zwei als Ruhekontakt ausgebildet ist. Es ist weiterhin möglich, diesen Kontakt auch als Arbeitskontakt auszugestalten. Es
ist auch möglich, zwischen Druckstück und Betätigungsstange
39 einen Widerstandsgeber anzuordnen, wobei der Widerstandswert mit der Stellung von Druckstück und Betätigungsstange
zueinander variabel ist. Es wäre auch möglich, den Abstand
zwischen Druckstück und Betätigungsstange im allgemeinen durch
einen irgendwie gearteten Stellungsgeber abzufühlen und ein
Signal zwischen den beiden angeschlossenen Leitungen, hier
23 und 25, von der Größe des Abstandes der Teile 38 und 39
abhängig zu machen, hier kämen eine Lichtschranke oder ein
kapazitiver Geber gleichermaßen in Frage.

Wichtig ist nur, daß der Kontakt oder sonstige Geber dann
betätigt werden, wenn der Ventilverschlußkörper 32 seine öffnende Endstellung erreicht, hier also sich an den Anschlag
33 entweder anlehnt oder im kurzen Abstand davor befindet.
Dieser Abstand kann im übrigen einstellbar sein. Es ist jedoch sinnvoll, als Stellungsgeber 24 ein solches Glied zu
wählen, was bei Erreichen einer kritischen Stellung in der
Nähe des Öffnungspunktes des Thermostatventils eine Sprungfunktion abgibt. Es ist gleichgültig, wie diese Sprungfunktion
aussieht und durch welche Mittel sie erbracht wird, wenn sie
nur als solche von einer Auswertlogik erfaßbar ist, die im
übrigen elektrisch sein muß.

Die Figur drei zeigt die Schaltung nach Figur eins in abstrahierender Version. So ist die gesamte Verdrahtung zusammengefaßt in einer Logik 40, die als Eingänge die Stellungsgeber der einzelnen Ventile 13, 14 und 15 aufweist, wobei diese
ihre Stellung über irgendwie geartete Verbindungen 41, 42
und 43 der Logik 40 übermittelt. Ein Ausgang 44 der Logik
führt zu der Spule 16 des Magnetventils.

Die in den Figuren eins bis drei dargestellte Regelungsvorrichtung arbeitet wie folgt:

Im Ruhestand der Heizungsanlage und bei kalter Heizung und
kalter Wärmequelle fordern alle Thermostatventile für die
zugehörigen Heizkörper Wärme an, das heißt, die Ventilverschlußglieder 32 sind unter Berücksichtigung ihrer Sollwertvorgabe vom Ventilsitz 31 entfernt und befinden sich in der
Nähe des Anschlages 33. Das bedeutet, daß für den Fall, daß
der Stellungsgeber gemäß Figur zwei als Ruhekontakt ausgebildet
ist, dieser Ruhekontakt geöffnet ist. Diese Wirkungsweise
kommt dadurch zustande, daß der Ausdehnungsfühler 36 seine
Stellstange 37 in sich hineinzieht. Dieser Bewegung folgt
das Druckstück 38. Das Ventilverschlußglied 32 steht unter
der Wirkung einer nicht bezeichneten Feder, die das Bestreben
hat, das Ventilverschlußglied in Richtung auf den Anschlag
33 zu ziehen, das Ventilverschlußglied folgt demgemäß der
Bewegung der Stellstange 37. Der Kontakt steht unter der Wirkung einer Feder, die in ihrer Wirkung schwächer ist als die
Rückführungsfeder für das Ventilverschlußglied.

Somit sind alle Ventile 13, 14, 15 ... geöffnet, die Geber
melden diese Öffnungsstellung an die Logik 40. Die Logik 40

0106095

arbeitet nach einer Grundbedingung, das heißt, sie gibt ein Ausgangssignal auf der Leitung 44 an das Magnetventil 5, das die Brennstoffzufuhr kontrolliert und somit indirekt Befehle an alle Ventile, mit der Schließbewegung 25 zu beginnen, das heißt den Anschlag 33 zu verlassen.

In der Figur vier ist unter weitgehender Übernahme der Zeichnungsdarstellung aus Figur eins der Stellungsgeber als Ruhekontakt ausgebildet dargestellt, das heißt, der Kontakt ist im unbelasteten Zustand offen. Der unbelastete Zustand stellt sich dann ein, wenn das Ventil-Verschlußglied 32 sich an den Anschlag 33 angelegt hat, sich also im Zustand maximaler Öffnung befindet. In Folge der Rückzugsbewegung der Stellstange 37 ist das Druckstück 38 von der Betätigungsstange 39 so weit entfernt, daß sich die Kontakte 24 öffnen. Somit ist der Stromkreis 23, 25, 27, 29 für die Relaisspule 20 an allen Stellen, an denen Kontakte eingeschleift sind, geöffnet. Das heißt, die Relaisspule 20 ist stromlos, damit nimmt der Kontakt 19 die dargestellte Stellung ein, das heißt, bei Vorliegen der sonst noch gegebenen Voraussetzungen liegt die Erregungsspule des Magnetventils 5 an Spannung, so daß die Wärmequelle in Betrieb ist beziehungsweise geht.

Die Erwärmung des Wassers der Heizungsanlage und das damit verbundene Ansteigen der Raumtemperatur bewirken, daß die einzelnen Temperaturfühler 36 ihre Endstellung verlassen und mit einer Ausdehungsbewegung beginnen. Diese Ausdehungsbewegung führt dazu, daß das Druckstück 38 den Kontakt zwischen

**0106095**

sich und der Betätigungsstange 39 einklemmt, so daß der Kontakt nach Erreichen eines bestimmten Weges schließt. Anschließend beginnt das Ventilschlußglied 32 sich vom Anschlag 33 in Richtung auf den Ventilsitz 31 zu bewegen, das heißt, in Regelstellung zu gehen. Wenn der Kontakt 24 und alle die anderen Kontakte geschlossen sind, so bedeutet das, daß die Temperatur der Vorlaufleitung 9 einen ausreichenden Wert angenommen hat. Das Schließen sämtlicher Kontakte 24, 26 und 28 bewirkt ein An-Spannung-Liegen der Relaisspule 20 und damit ein Öffnen des Kontaktes 9, womit die Wärmequelle außer Betrieb geht.

Kühlt der Raum aufgrund des Auskühlens der Wärmequelle nun wieder ab, so erreicht das Ventilverschlußglied 32 desjenigen Thermostatventils mit dem höchsten Vorlauftemperaturbedarf wieder den zugehörigen Anschlag 33, seine Kontakte werden geöffnet. Alle weitere Thermostatventile befinden sich noch in Regelstellung, ihre Konstake sind geschlossen. Das Öffnen des ersten Kontaktes bringt die Wärmequelle wieder zum Anlaufen, damit muß eine Unbedingtheit für jeden Kontakte vorliegen.

Für den Fall, daß die Kontakte 24, 26 und 28 als Arbeitskontakte ausgebildet sind, gilt die Darstellung gemäß Figur fünf.

Bei dem Ausführungsbeispiel gemäß Figur fünf sind die Stellungsgeber 25, 26 und 28 insoweit abgewandelt, als daß die Kontakte nunmehr statt bei offenem Ventil offen bei offenem Ventil geschlossen sind. Da es für die Funktionen der Erfindung wesentlich ist, daß der Sprung in der Funktion des Gebers

**0106095**

dann eintritt, wenn das Thermostatventil seine Stellung maximale Öffnung verläßt, ist die zugehörige Leitungsführung so ausgebildet, daß die Relaisspule stromlos wird, wenn der letzte Kontakt die Ruhestellung verlassen hat.

Joh. Vaillant GmbH u. Co.

EP 921

1. September 1983

- 1 -

Ansprüche

1. Regelung für eine wenigstens einen thermostatventilgesteuerten Heizkörper aufweisenden, von einer ventilgesteuerten Wärmequelle beheizten Heizungsanlage, dadurch gekennzeichnet, daß die Thermostatventile (13, 14, 15 ...) einen Geber (24, 26, 28..) aufweisen, dessen Zustand mit der Stellung des Ventilverschlußgliedes (32) variabel ist und diesen ändert, wenn das Ventilverschlußglied sich seiner öffnenden Endstellung annähert beziehungsweise sich hiervon entfernt, und daß alle Geber im Sinne einer ODER-Bedingung an den Antrieb (16) des Ventils (5) der Wärmequelle (1) angeschlossen sind.

2. Regelung nach Anspruch eins, dadurch gekennzeichnet, daß alle Geber (24, 26, 28) mit einer Logik verbunden sind, deren Ausgang an den Antrieb (16) des Ventils

- 2 -

(5) der Wärmequelle (1) angeschlossen ist und die
eine Inbetriebnahme der Wärmequelle herbeiführt,
wenn wenigstens ein Geber eine Thermostatventilstellung in der Nähe der öffenenden Endstellung
des betreffenden Thermostatventils meldet.die Geber
eine Sprungcharakteristik aufweisen.

3.    Regelung nach Anspruch eins oder zwei, dadurch gekennzeichnet, daß die Geber eine Sprungcharakteristik
aufweisen.

4.    Regelung nach Anspruch drei, dadurch gekennzeichnet,
Geber Kont.

5.    Regelung nach Anspruch eins oder vier, dadurch gekennzeichnet, daß als Kontakt ein Ruhekontakt vorgesehen ist, der bei geöffnetem Ventil in der Offenstellung steht, und daß sämtliche Ruhekontakte (24,
26, 28) in einem elektrischen Stromkreis (23, 29)
mit einem Relais in Serie liegen, das einen Ruhekontakt aufweist, der in den Stromkreis der Erregungsspule (16) des Magnetventils (5) der Wärmequelle
(1) eingeschleift ist.

6.    Regelung nach Anspruch eins oder vier, dadurch gekennzeichnet, daß bei Ausbildung der Kontakte als
Arbeitskontakte, die bei geöffnetem Ventil Schließstellung einnehmen, diese zueinander parallel ge-

**0106095**

schaltet, ihrerseits in Serie mit einer Relaisspule (20) in einem Stromkreis (23, 29) in Serie liegen, wobei ein Arbeitskontakt der Relaisspule (19) in einem elektrischen Stromkreis mit der Antriebsspule (16) des Magnetventils (5) der Wärmequelle in Reihe liegt.

0106095

Fig. 1

Fig. 2

Fig. 3

Fig. 4

Fig. 5

Europäisches
Patentamt

**EUROPÄISCHER RECHERCHENBERICHT**

Nummer der Anmeldung

EP 83 10 8652

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-3 036 661 (SIEMENS AG) <br> * Patentansprüche; Figur * <br> --- | 1,2 | G 05 D 23/275 <br> G 05 D 23/19 <br> F 24 D 19/10 |
| Y | DE-A-1 454 448 (LICENTIA PATENT-VERWALTUNGSGESELLSCHAFT MBH) <br> --- | 1,2 | |
| A | DE-A-3 042 317 (H. MÖHLENHOFF) <br> --- | | |
| A | DE-B-2 714 511 (DANFOSS A/S) <br> ----- | | |

RECHERCHIERTE
SACHGEBIETE (Int. Cl. ³)

G 05 D 23/00
F 24 D 19/00

Der vorliegende Recherchenbericht wurde für alle Patentansprüche erstellt.

| Recherchenort <br> BERLIN | Abschlußdatum der Recherche <br> 12-12-1983 | Prüfer <br> BEYER F |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, überein-stimmendes Dokument

EPA Form 1503. 03.82